# EUROPEAN PATENT SPECIFICATION

(11) **EP 3 165 387 B1**
(45) Date of publication and mention of the grant of the patent: **03.10.2018**
(21) Application number: 16195742.8
(22) Date of filing: 26.10.2016
(51) Int. Cl.: B60J 7/06

(54) **ACTUATING AND TOWING DEVICE FOR A COVER SYSTEM ON SECURED GUIDES FOR A TRUCK-BODY**
BETÄTIGUNGS- UND SCHLEPPVORRICHTUNG FÜR EIN ABDECKSYSTEM AUF GESICHERTEN FÜHRUNGEN FÜR EINE LKW-AUFBAU
DISPOSITIF DE REMORQUAGE ET D'ACTIONNEMENT POUR UN SYSTÈME DE COUVERTURE SUR DES GUIDES SÉCURISÉS POUR UN CORPS DE CAMION

(30) Priority: 03.11.2015 IT UB20154958
(43) Date of publication of application: 10.05.2017
(73) Proprietor: Trakover S.r.l., 33070 Brugnera (PN) (IT)
(72) Inventor: PIVETTA, Cesarino, 33070 Brugnera (PN) (IT)
(74) Representative: De Anna, Pier Luigi

(56) References cited:
- EP-A1- 2 311 678
- EP-A1- 2 835 282
- EP-A2- 1 228 912
- EP-A2- 1 884 386
- US-A1- 2005 035 623

## Description

The present invention relates to an actuating and towing device suitable to move along secured guides, and in particular to the use of said device for covering truck-bodies comprising guides secured to the side walls of the truck-body.

This device allows opening and closing of tarpaulins on vehicles that require their use with easy and relatively effortless operations.

There are known to all, above all in the field of industrial vehicles, as well as other fields, tarpaulins for covering so-called truck-bodies, these covers being required in order to protect, hold and consequently prevent dispersal of the materials transported.

For example, when transporting sand, gravel or similar materials, whose components, being very light and sensitive to moving air, can thus can be removed from their position on the truck-body and dispersed by turbulences generated by the air resistant to the forward movement of the vehicle, consequently falling onto the vehicles travelling behind the vehicle transporting these materials, causing considerable problems during driving and also the risk of accidents caused by poor visibility or even breaking the glass (windscreen) of vehicles travelling behind the aforesaid means of transport, as well as other problems such as soiling roads or even environmental pollution.

For this reason, different solutions of known type are present in the field related to covers for the bodies of vehicles for a wide variety of uses.

These solutions are implemented with complex means and methods, which are also very costly and must be produced time by time according to the effective dimensions of the type of truck-body to be covered and are time consuming and difficult to fit, resulting in a considerable waste of working hours.

These solutions have complicated systems for example consisting of systems of shafts for transmitting motion to the supporting ribbing of the covering tarpaulin. These shafts are also provided with bevel gears for transmitting their rotary motion to the corners of said truck-bodies in which other shafts that must also be rotated are positioned. These require reduction gears for transmitting motion in order to allow reductions of the force to be applied for movement of the assembly.

Moreover, as these systems are very heavy and have considerable friction, they are not easily operated by hand, even if provided with a reduction gear, but require auxiliary actuating means such as electric motors or other alternative means suitable for this purpose.

The patent EP1228912 describes a system for opening and closing tarpaulins used to cover vehicles, comprising a cable that moves along pulleys moved by a bevel gear. This invention partly solved the aforementioned problems, by providing a control device for opening and closing tarpaulins to cover the bodies of industrial, agricultural or similar vehicles consisting of a telescopic tubular element inside which there is placed a bevel gear that moves vertical pulleys at the front corners of the body and rear pulleys by previous passage through other horizontal front pulleys. However, this solution is complex both as regards production, as it has numerous machined and therefore costly moving parts, and as regards operation, as the numerous moving parts require frequent checking and costly maintenance. EP1754618 discloses a device having the same purpose, which allows a reduced subsequent intervention of fabrication work on the body for fitting the device, symmetrical distribution of the tension of the supporting cable on both sides of the vehicle, realignment of the struts at stroke end, safe stable sliding inside guide pulleys, very little maintenance on the moving parts and quick assembly and disassembly. The device EP1754618 defines a covering for bodies comprising cables arranged respectively one on each side along the upper edges of the sideboards of the body of a related vehicle, struts on which a tarpaulin is secured and an operating device, one for each side, for closing and opening said tarpaulin which moves along the related cable. The operating device is fitted on the first strut positioned towards the tailboard of the body and comprises a drive pulley that grips the cable and operated by a gear motor and at least two diverter pulleys on the same plane as said drive pulley.

EP2311678 discloses an actuating and towing device suitable to move along a guide, comprising a rotary axis motor connected to said actuating device, opposite rollers which in use act in pairs on said guide and a mechanism for transferring the rotary motion to the rollers so as to impart the towing and the displacement of said device along said guide. This closing systems are not acceptable for operating situations in building sites or quarries, where the presence of the tensioned guiding cables of the devices is unsuitable due to the intrinsic fragility of the system. Moreover, they are limited to bodies with geometries suitable for back unloading, and cannot be fitted to bodies in which unloading takes place from the sides. The cables of the prior art systems and the moving parts require frequent maintenance and cleaning to prevent damage to the pulleys, but disassembly of the device for the subsequent period maintenance in the factory and subsequent reassembly are time consuming.

### Description of the invention

The object of the present invention is therefore to solve the aforesaid problems and to provide a device for controlling opening and closing of tarpaulins for covering industrial, agricultural or similar vehicles that allows reduced subsequent intervention of fabrication work on the body to assemble this device, avoids the use of tensioned supporting cables on both sides of the body, allows realignment of the struts at stroke end, ensures safe stable sliding on a guide and guarantees very little maintenance on the moving parts, quick assembly and disassembly.

A system that responds to this need is defined by an actuating and towing device suitable to move along secured guides according to the invention.

The device comprises a rotary axis motor connected to said actuating device, opposite rollers which in use act in pairs on said guide and a mechanism for transferring the rotary motion to the rollers, so as to impart the towing and the displacement of said device along said secured guides. According to the present invention, the actuating device comprises at least one motor gear, provided with a coaxial drive roller, secured and rotating on a first support plate on an axis perpendicular to said plate; a passive gear provided with a coaxial roller, the passive gear is secured via its axis of rotation on a second shaped support plate or receiver, which pivots with respect to the first support plate through a rotation pin. A system for adjusting the receiver by a toggle screw and bolt with adjusting spring at a first end is pivoted on the rotating receiver on a plane parallel to the rotation pin of the receiver and is secured to said first support plate.

The system for adjusting the receiver allows, by tightening said screw/bolt, engagement of the passive gear on said motor gear and tightening of the drive pulleys coaxial to the pair of gears, on the secured guide, so that the actuating device moves simultaneously along the guide.

Preferably, said actuating device is mounted on cover systems for truck-bodies comprising guides secured to the side walls of the bodies arranged respectively one for each side along the upper edges of the side walls of the body of a related vehicle, a number n of struts on which a tarpaulin is secured and at least one pair of actuating devices according to the invention. A pair of actuating devices, one for each side, on which there is secured at least a first strut positioned towards the tailboard of the body, close and open the tarpaulin. The pair of devices move in use along the guides secured to the sideboards of the body, a motor mounted on the first strut simultaneously transmits the rotary motion of the motor via flexible shafts to the pair of actuating devices. The actuating devices simultaneously move along the guides deploying or closing the cover.

According to a preferred embodiment, the device has a pair of balancing wheels secured on the support plate and rotating on axes perpendicular to the plate, such that in use the plate rests on said pair of balancing wheels and the support point of said pairs of wheels is coplanar with the support point of the drive motor roller on the guide.

The device can be provided between the motor and the motor gear with a reduction gear, preferably of orthogonal type.

The transfer mechanism of the rotary motion from the motor to the rollers can be a flexible rotating shaft. Preferably, the moving rollers can have a seat for housing said guides.

According to a preferred embodiment, the cover system has a pair of struts secured rigidly to the plates of the actuating devices. Preferably, the cover system has one or more pairs of actuating devices each equipped with a motor. Preferably, the cover system has secured guides positioned on the side walls of the body, which continue in correspondence of these latter, but separated from them, [with] secured guides positioned on the secured front part of the body so that when the body is completely uncovered, the actuating devices are on the guides secured rigidly on the secured front part of the body and the side walls can be opened for side unloading of the materials.

### Detailed description of the figures.

Fig. 1 illustrates in a perspective view the cover system in question fitted to the body of a generic vehicle, with some parts indicated with a thin line to facilitate comprehension.
Fig. 2 shows the actuating device of the tarpaulin according to the invention.
Fig. 3 shows a detail of the actuating device of the tarpaulin according to the invention.
Fig. 4 shows a detail of the actuating device of the tarpaulin according to the invention in which the axis for transmitting motion and the reduction gear are highlighted.
Fig. 5 shows a detail of the actuating device of the tarpaulin according to the invention according to a front view.
Fig. 6 shows a detail of the actuating device of the tarpaulin according to the invention according to a side view.

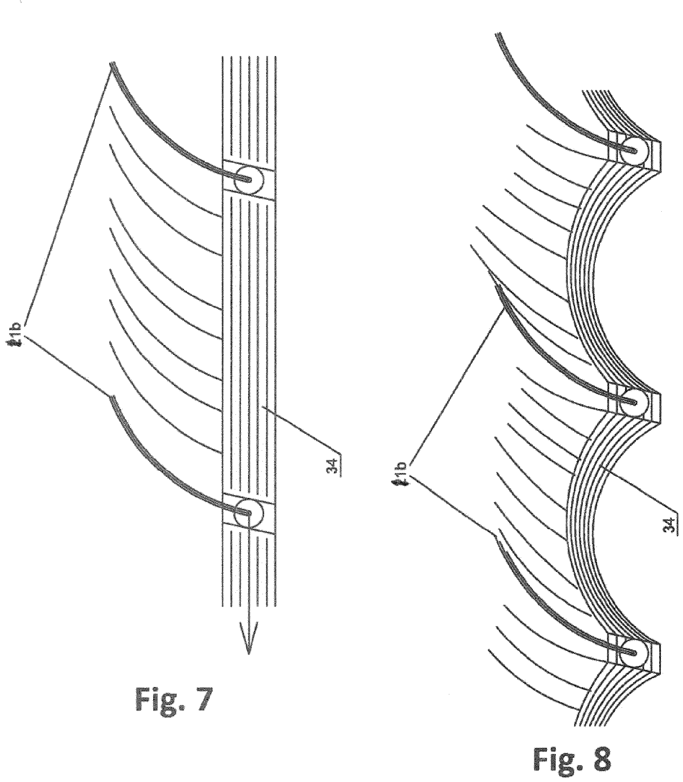

Fig. 7 shows a detail of the struts of the tarpaulin.
Fig. 8 shows a detail of the struts of the tarpaulin during folding thereof.

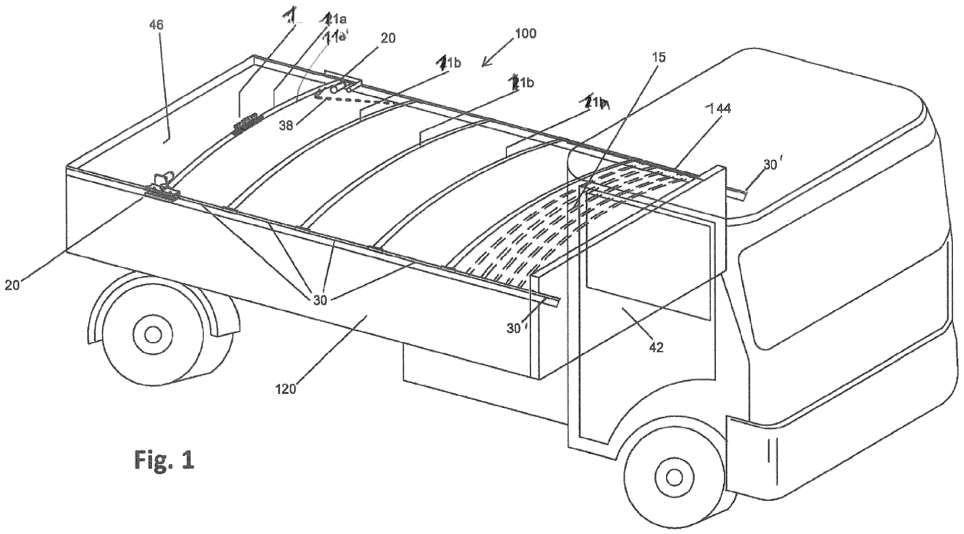

Fig. 1 shows the system 100 for controlling opening and closing of tarpaulins covering the bodies of industrial, agricultural and/or similar vehicles according to the invention. This system is described here fitted to the body 120 of the industrial vehicle depicted with thin lines. The body 120 is partly covered by the tarpaulin 15 reinforced by the cross struts 11b.

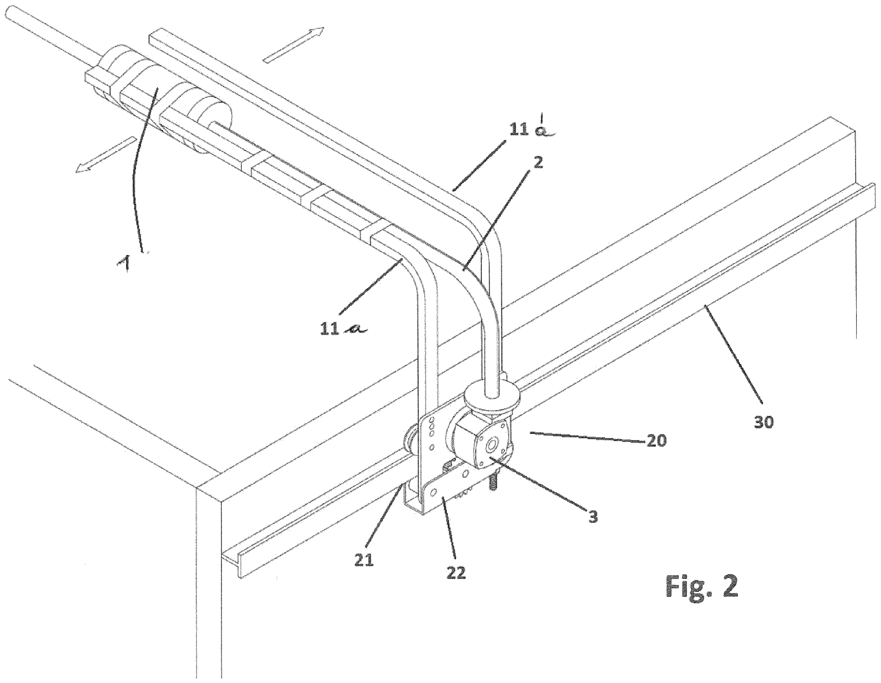

The actuating device 20, positioned on both sides of the body, is secured at the first cross strut 11a. The actuating device 20 preferably comprises [comprising] a reduction gear, moves or translates along the secured guides 30 (Figs. 1 and 2).

Each guide 30 positioned on the right or left side is preferably adequately secured under the upper edge of the sideboards of the body, also to prevent the guide from being damaged by the operators of site vehicles. In a preferred embodiment, the guide is protected with a protective casing, not shown in the figure. The guide 30 secured to the right and left side of the body is secured according to the known methods of implementation to the wall of the body, by the front and rear ends of the side members of the body, as shown in Fig. 1.

According to a preferred embodiment, said secured guides (30) located on said side walls of the body continue in correspondence of these latter, but separated from them, [with] guides 30' secured rigidly to the fixed front part of the body so that when the body is completely uncovered, the actuating devices are located on the part of the guide (30') secured rigidly to the fixed head part of the body. With this configuration of the opening and closing system, the sidewalls are completely free from the components of the closing system and can be opened for side unloading of the material placed on the body. This solution has the feature that advantageously the sidewalls of the body are not constrained to the cover system.

The tarpaulin 15 is supported by the strut 11a and by the struts 11b substantially identical to one another, which can consist of adjustable telescopic tubular elements. They can be fundamentally composed of a central portion formed by a length of suitable metal tube appropriately bent so that the resulting strut (11a-11b) forms a related supporting wall for the tarpaulin 15 that is arched slightly upwards. Respective lengths of tube with an outer diameter equal to the inner diameter of the length of tube forming said central portion, and also bent in the same way, can be inserted into the ends of this latter so as to move freely therein.

Consequently, the length of the struts 11a and 11b can vary so as to adapt to the different widths of the various bodies to which the related device forming the subject matter of the present invention is fitted. The final length can be secured by means of suitable screws, rivets or the like.

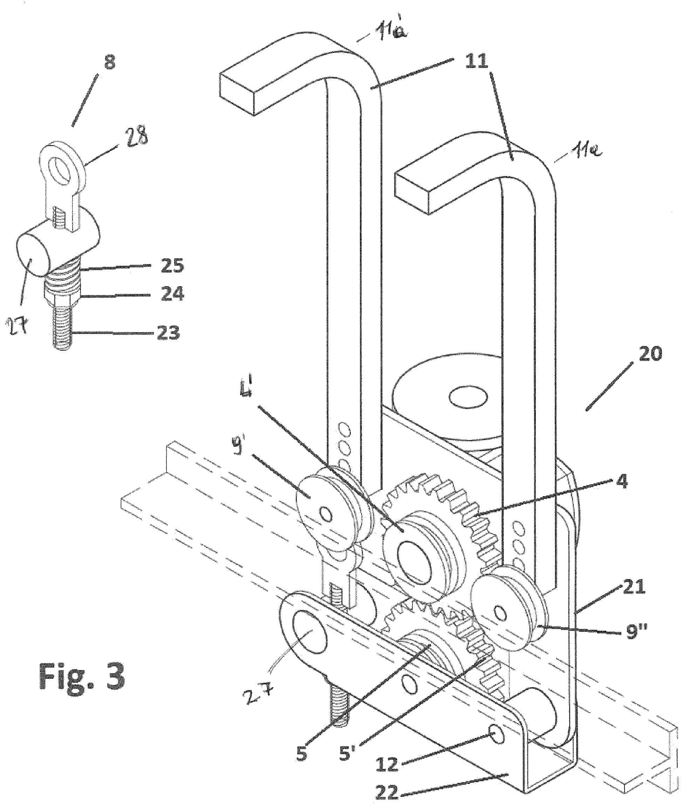

However, the struts 11a and 11b can also be composed of a single tube or analogous profile, for example with rectangular shapes as shown in Figs. 2 and 3. The geometry of the struts according to this preferred embodiment allows positioning of the moving guides on which the struts are towed in a protected position under the upper edge of the sidewall of the body. According to a preferred embodiment, one or more struts, preferably 2, can be positioned for each pair of actuating devices.

On the first strut 11a, arranged towards the rear wall of the body, there is secured the actuating device 20 that, moving along the guide 30 between the front and rear end of the body, will pull the tarpaulin covering it or, vice versa, will push it towards the front wall of the body, in this way uncovering the body to free it from the protection of the tarpaulin. Further intermediate pairs of actuating devices can be provided to facilitate opening and closing of the cover of the bodies. The struts not secured to the actuating device are positioned on support plates equipped with pairs of wheels that ensure correct movement on the guides when the pair of actuating devices and related strut or pair of struts is secured to the actuating devices. The struts can be connected to one another by stiffening ribs made of flexible material. These stiffening ribs facilitate the bellows opening and closing of the struts and correct folding of the tarpaulin on the front of the body.

Fig. 2 represented a preferred embodiment of the cover system according to the invention. In accordance, a pair of struts 11 of rectangular shape is secured on an actuating and towing device 20. A motor 1 is secured on the strut 11 in central position and via a flexible double drive shaft 2, transmits rotary motion to both pairs of right and left actuating devices 20. The figure only shows the actuating device positioned on the right of the bottom 46 of the body 120.

A pair of secured guides 30 are secured to the sideboards of the body, as shown in Fig. 2 for the sideboard 120 positioned on the right of the bottom of the body 46.

The motor 1 supplies the rotary motion to both the actuating devices 20, allowing actuation and towing of the tarpaulin 15 secured on the struts and consequently opening and closing of the cover. The other struts 11b secured on support plates equipped with pairs of wheels move following opening or closing of the tarpaulin secured to the first strut on the guides 30 positioned on the sideboards of the body 120.

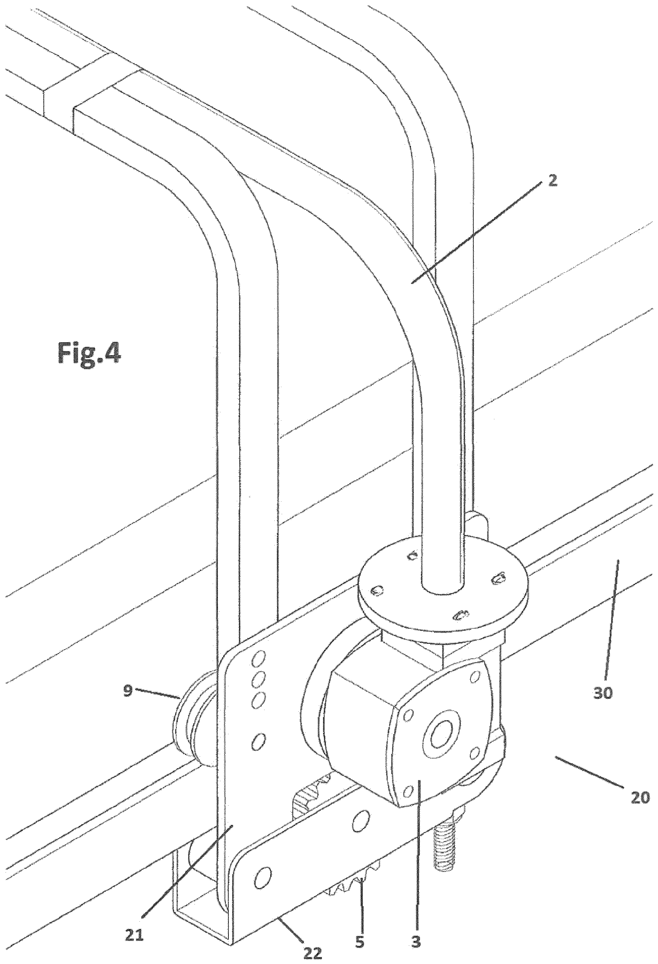

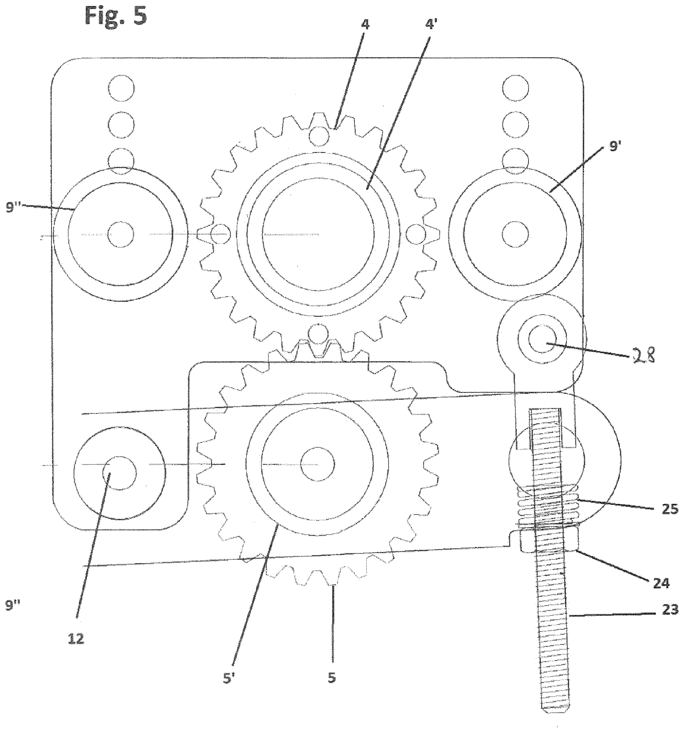

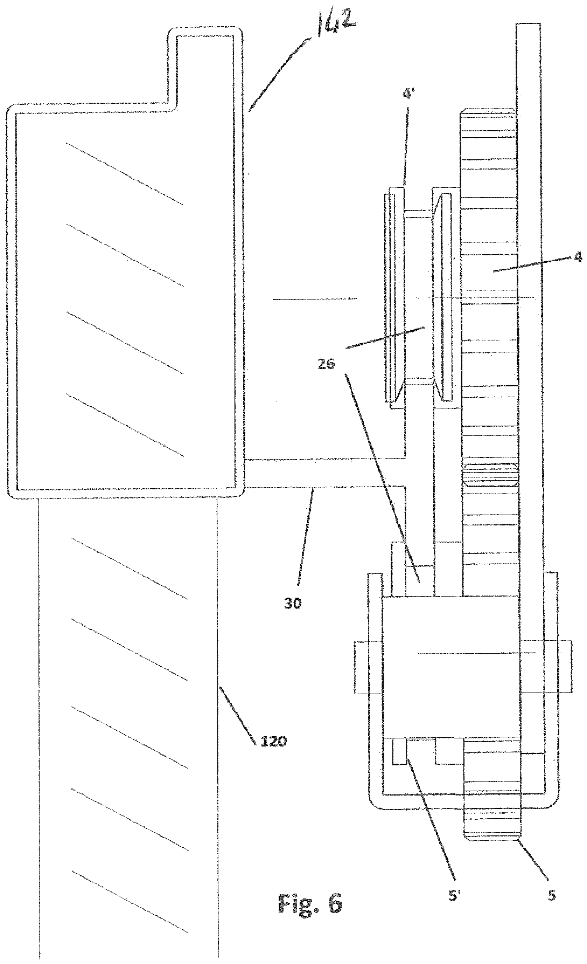

Figs. 3-6 show various details of a preferred embodiment of the actuating and towing device 20 according to the invention. In particular, the actuating and towing device 20 according to the invention is suitable to move along secured guides (30). The device comprises a motor with rotary axis motor connected to said actuating device, opposite rollers (4', 5') which in use act in pairs on said guide 30 and a mechanism for transferring the rotary motion to the rollers. The device according to the invention imparts the towing and the displacement of said device along said secured guides.

The actuating device (20) is provided with at least one motor gear (4) provided with a drive roller (4') of coaxial drive, secured and rotating of a first support plate (21) on an axis perpendicular to said plate; a passive gear (5) provided with a coaxial roller (5'), said passive gear secured via its axis of rotation on a second shaped support plate or receiver (6) and pivoting with respect to the first support plate through a rotation pin (12); a system (8) for adjusting the receiver by a toggle screw 23 and bolt (24) with adjusting spring 25 at a first end, said adjusting system pivoting on the rotating receiver on a plane parallel to the rotation pin (12) of the receiver and with a fastening end (28) to said first support plate (21);

The system (8) for adjusting the receiver (6) allows by tightening the screw/bolt (23, 24) engaging of said passive gear (5) on said motor gear (4) and tightening of said drive pulleys (4') (5') coaxial to said gears (4) (5) on said secured guide (10), so that said actuating device (20) moves simultaneously along said secured guides.

The device according to the invention rests on the guide 30 preferably through a pair of balancing wheels (9', 9") secured on said support plate (21). The balancing wheels rotate on axes perpendicular to said plate (21) such that in use said plate (21) rests on said pair of balancing wheels (9', 9") and the support point of said pairs of wheels is coplanar with the support point of said roller drive motor (4') on said guide.

In a preferred embodiment, between the motor 1 and the motor gear (4) connected by a flexible rotating shaft, there is provided a reduction gear (3), preferably of orthogonal type.

The moving rollers (4', 5') of the device according to the invention can have a seat to facilitate housing of the roller in the guides.

In particular, in Fig. 3, the device 20 is positioned on the guide 30 through balance wheels 9', 9" secured to the support plate 21 with receiver 22 open. The receiver can rotate on the rotation pin 12 secured rigidly on the support plate 21. Subsequently, the receiver 22 is secured through an adjusting system 8 to the support plate 21. The adjusting system 8 of the receiver 22 consists of a toggle screw 23 mounted on a pin 27 for fastening to the receiver. The screw passes crosswise through the pin 27. The screw has a bolt (24) with an adjusting spring 25 at a first end and fastening means 28 at the opposite end. The fastening end (28) fastens the adjusting system 8 to the first support plate (21); the adjusting system pivoting on the receiver rotates on a plane parallel to the rotation pin (12) of the receiver.

The system (8) for adjusting the receiver (6) allows by tightening the bolt/screw (24, 23) the receiver and in particular the passive gear (5) to be moved towards the motor gear (4) and simultaneously allows tightening of the drive pulleys (4') (5') coaxial to the gears (4) (5) on the secured guide (10). By choosing gears 4, 5 and drive pulleys 4', 5' of appropriate sizes, the adjusting system simultaneously allows the gears to engage with one another and the drive pulleys to be sufficiently tightened to the guide so that when the motor 1 rotates and transmits motion via the flexible shaft 2 to the pair of actuating devices the strut system 11a and the actuating and towing device (20) move along the secured guides by simultaneous horizontal movement.

The cover system (100) for truck-bodies comprises guides (30) secured to the side walls 120 of said truck-bodies 100 arranged respectively one on each side along the upper edges of said side walls of said truck-body (120) of a related vehicle, struts (11a, 11b, ... 11n) on which a tarpaulin (15) is secured and at least one pair of actuating devices (20) as claimed, one for each side, on which there is secured at least the first strut (11a) positioned towards the tailboard (46) of said body (120). For closing and opening said tarpaulin (15), said pair of actuating devices move in use along said secured guides (30), a motor (1) mounted on said first strut (11a), flexible shafts (2) to simultaneously transmit the rotary motion of the motor (1) to said pair of actuating devices (20); wherein said actuating devices (20) simultaneously move along the guide (10) deploying or closing said cover (100).

According to preferred embodiments, one or more struts, preferably a pair of struts (11a, 11a') are secured rigidly to said plate (21) of the actuating devices. Advantageously, the cover system according to the invention has one or more pairs of actuating devices (20) each equipped with a motor.

Advantageously, the secured guides (30) of the cover system, located on said side walls 120 of the body 100, continue along these latter, but separated from them, [with] secured guides 30' placed on the fixed head part 42 of the body so that when the body is completely uncovered, the actuating devices are located on the secured guide 30' with the fixed head part 42 and the side walls 120 can open for side unloading of the material.

With respect to the prior art, it must be noted that there are no complex mechanical devices comprising cables in tension, or cables in movement and movement systems that require bevel gears secured on the side walls of the body and related reinforcing fabrication work. From the described it is evident that the device in question and composed of very simple elements that are easily available on the market, easy to produce and install, adaptable to any type of body of industrial, agricultural or other motor vehicles and with very few moving parts.

Moreover, all the elements are produced so that they can be offered to the public in the form of an "assembly kit", in order to limit the costs of installation, which can be carried out simply and directly even by unskilled operators, without requiring using special tools only available at specialized workshops.

With the present invention, many advantages are obtained with respect to similar known devices.
- rapid assembly and disassembly;
- possibility of complete repair of the device including the actuating device, which in the prior art is instead secured on the truck-body, by full disassembly and sending to the maintenance workshop;
- no restriction of size of the truck-body;
- no need for particular costly fabrication work for securing control elements on the truck-body;
- the absence of metal traction cables and drive pulleys.

It is understood that numerous variations can be made to the device forming the subject matter of the present invention as defined by the appended claims.

## Claims

1. An actuating and towing device (20) suitable to move along a guide (30), comprising a rotary axis motor (22) connected to said actuating device (20), opposite rollers (4 ', 5') which in use act in pairs on said guide (30) and a mechanism (2) for transferring the rotary motion to the rollers (4 ', 5'), so as to impart the towing and the displacement of said device (20) along said guide (30), **characterized in that**
said actuating device (20) comprises:
• at least one motor-gear (4), connected to the motor (1), provided with a drive roller (4 ') of coaxial drive, wherein gear (4) and roller (4') are secured and rotating on a first support plate (21) on an axis perpendicular to said plate (22);
• a passive gear (5) provided with a coaxial roller (5'), said passive gear secured via its axis of rotation on a second shaped support plate or receiver (22) and pivoting with respect to the first support plate through a rotation pin (12),
• a system (8) for adjusting the receiver (22) by a toggle screw (23) and bolt (24) with adjusting spring (25) at a first end, said adjusting system pivoting on said rotating receiver (22) on an axis parallel to the rotation pin (12) of the receiver and with a fastening end (28) to said first support plate (21);
wherein the system (8) for adjusting the receiver (22) allows by tightening said screw/bolt (23, 24) engaging of said passive gear (5) on said motor gear (4) and tightening of said drive pulleys (4') (5') coaxial to said gears (4) (5), on said guide (30), so that said actuating device (20) moves along said guide.

2. Device according to claim 1, wherein a pair of balancing wheels (9', 9") are secured on said support plate (21) and rotate on axes perpendicular to said plate (21), such that in use said plate (21) rests on said pair of balancing wheels (9', 9") and the support point of said pairs of wheels is coplanar with the support point of said roller drive motor (4') on said guide.

3. Device according to claims 1-2, wherein between said motor (1) and said motor gear (4) there is provided a reduction gear (3), preferably of orthogonal type.

4. Device according to claims 1-3, wherein the transfer mechanism (2) of the rotary motion from the motor to the rollers (4, 5) is a flexible rotating shaft.

5. Device according to claims 1-4, wherein the moving rollers (4 ', 5') have a seat (26) for housing said guides (30) and the receiver (22) is U-shaped.

6. Cover system (100) for a truck-body comprising guides (30) secured rigidly to the side walls (120) of said truck-body arranged respectively one on each side along the upper edges of said side walls (120) of said truck-body, struts (11a, 11b, ... 11n) on which a tarpaulin (15) is secured and at least one pair of actuating devices (20) according to one of claims 1 to 5, one for each side, on which there is secured at least the first strut (11a) positioned towards the tailboard (46) of said body (100), for closing and opening said tarpaulin (15), said pair of actuating devices moving in use along said guides (30), a motor (1) mounted on said first strut (11a), flexible shafts (2) to simultaneously transmit the rotary motion of the motor (1) to said pair of actuating devices (20); wherein said actuating devices (20) in use simultaneously move along said guide (30) deploying or closing said cover (100).

7. Cover system according to claim 6, wherein a pair of struts (11a, 11a') are secured rigidly to said plate (21) of said actuating devices (20).

8. Cover system according to claim 6-7, wherein there are present several pairs of actuating devices (20) secured rigidly to several pairs of struts (11n, 11n') each equipped with a motor.

9. Cover system according to claim 6-8, wherein said guides (30) located on said side walls (120) of said truck-body continue in correspondence of these latter, but separated from them, with further comprising guides (30') placed on the side of the fixed part (42) of the truck-body, so that when the body is completely uncovered, the actuating devices (20) are located on the secured guide (30') with the fixed part (42) and side walls (120) of the truck-body can be opened for side unloading of the material.

## Patentansprüche

1. Betätigung- und Schleppvorrichtung (20), die zur Bewegung entlang einer Führung (30) ausgelegt ist, aufweisend einen Drehachsenmotor (1), der mit der Betätigungsvorrichtung (20) verbunden ist, gegenüberliegende Rollen (4 ', 5'), die im Gebrauch auf der Führung paarweise agieren, und einen Mechanismus (2) zum Übertragen der Drehbewegung auf die Rollen (4 ', 5') derart, dass der Vorrichtung (20) entlang der Führung (30) das Schleppen und das Verschieben vermittelt wird, **dadurch gekennzeichnet, dass** die Betätigungsvorrichtung (20) aufweist:
• zumindest ein mit dem Motor (1) verbundenes und mit einer Antriebsrolle (4 ') eines Koaxialantriebs versehenes Zahnrad (4), wobei das Zahnrad (4) und die Rolle (4 ') auf einer ersten Trägerplatte (21) angebracht sind und sich um eine Achse senkrecht zur Platte (21) drehen;
• ein passives Zahnrad (5), das mit einer Koaxialrolle (5') versehen ist, wobei das passive Zahnrad (5) mittels seiner Drehachse auf einer zweiten Form-Tragplatte bzw. einer Aufnahme (22) angebracht und in Bezug auf die erste Tragplatte über einen Drehstift (12) verschwenkbar ist;
• ein System (8) zum Einstellen der Aufnahme (22) durch eine Knebelschraube (23) und einem Bolzen (24) mit einer Einstellfeder (25) an einem ersten Ende, wobei das Einstellsystem auf der Drehaufnahme (22) um eine Achse parallel zum Drehstift (12) der Aufnahme und mit einem Festlegungsende (28) an der ersten Tragplatte (21) verschwenkt;
wobei das System (8) zum Einstellen der Aufnahme (22) es durch Festdrehen der Schraube/des Bolzens (23, 24) ermöglicht, das passive Zahnrad (5) mit dem Motorzahnrad (4) in Eingriff zu bringen und die Antriebsrollen (4') (5') auf der Führung koaxial zu den Zahnrädern (4) (5) zu verspannen, so dass die Betätigungsvorrichtung (20) sich entlang der Führung bewegt.

2. Vorrichtung nach Anspruch 1, wobei ein Paar Ausgleichsräder (9 ', 9' ') auf der Tragplatte (21) angebracht sind und sich um Achsen senkrecht zur Platte (21) drehen, so dass die Platte (21) im Gebrauch auf dem Paar Ausgleichsräder (9', 9") ruht und der Stützpunkt des Paars Ausgleichsräder (4') auf der Führung verläuft.

3. Vorrichtung nach Anspruch 1 oder 2, wobei zwischen dem Motor (1) und dem Motorzahnrad (4) ein Untersetzungsgetriebe (4), bevorzugt vom Orthogonaltyp vorgesehen ist.

4. Vorrichtung nach einem der Ansprüche 1 bis 3, wobei der Übertragungsmechanismus (2), der die Drehbewegung von dem Motor auf die Rollen (4, 5) überträgt, eine flexible Drehwelle ist.

5. Vorrichtung nach einem der Ansprüche 1 bis 4, wobei die Bewegungsrollen (4 ', 5') einen Sitz (269 zur Aufnahme der Führungen (30) aufweist, und wobei die Aufnahme (22) U-förmig ist.

6. Abdecksystem (100) für einen Lkw-Aufbau, aufweisend Führungen (30), die an den Seitenwänden (120) des Lkw-Aufbaus, jeweils einer auf jeder Seiter Seite entlang den oberen Rändern der Seitenwände (120) des Lkw-Aufbaus sicher befestigt sind, Streben (11a, 11b, ... 11n), auf denen eine Persenning (15) angebracht ist, und zumindest ein Paar Betätigungsvorrichtungen (20), jeweils eine auf jeder Seite, nach einem der Ansprüche 1 bis 5, auf denen zumindest die erste Strebe (11a) zur Ladeklappe (46) des Aufbaus (100) weisend zum Schließen und Öffnen der Persenning (15 angebracht ist, wobei das Paar Betätigungsvorrichtungen sich im Gebrauch entlang den Führungen (430) bewegen, einen Motor (1), der an der ersten Strebe (11a) angebracht ist, flexible Wellen (2) zum gleichzeitigen Übertragen der Drehbewegung des Motors (1) auf das Paar Betätigungsvorrichtungen (20); wobei die Betätigungsvorrichtungen (20) sich im Gebrauch, die Abdeckung (100) ausbreitend bzw. schließend entlang der Führung (30) bewegen.

7. Abdecksystem nach Anspruch 6, wobei ein Paar Stützen (11a, 11a') an der Platte (21) der Betätigungsvorrichtungen (20) sicher angebracht sind.

8. Abdecksystem nach Anspruch 6 oder 7, wobei mehrere Paare an den mehreren Paaren Stützen (11n, 11n') sicher festgelegt und mit einem Motor versehene Betätigungsvorrichtungen (2) vorgesehen sind.

9. Abdecksystem nach einem der Ansprüche 6 bis 8, wobei die an den Seitenwänden (120) des Lkw-Aufbaus angeordneten Führungen (30) sich in Übereinstimmung mit diesen erstreckend verlängert sind, wobei Führungen (30') auf der Seite des feststehenden Teils (42) des Lkw-Aufbaus angeordnet vorgesehen sind, so dass dann, wenn der Aufbau vollständig freigelegt ist, die Betätigungsvorrichtungen (20) auf der gesicherten Führung (30') zu liegen kommen, wobei der feststehende Teil (42) und die Seitenwände (120) des Lkw-Aufbaus zum seitlichen Entladen von Material geöffnet werden können.

## Revendications

1. Dispositif d'actionnement et de traction (20) approprié pour se déplacer le long d'un guide (30), comprenant un moteur à axe rotatif (22) relié audit dispositif d'actionnement (20), des rouleaux opposés (4', 5') qui, en fonctionnement, agissent par paires sur ledit guide (30) et un mécanisme (2) pour transférer le mouvement rotatif aux rouleaux (4', 5'), afin d'induire la traction et le déplacement dudit dispositif (20) le long dudit guide (30), **caractérisé en ce que**
ledit dispositif d'actionnement (20) comprend :
• au moins un engrenage moteur (4), relié au moteur (1), muni d'un rouleau d'entraînement (4') d'entraînement coaxial, dans lequel l'engrenage (4) et le rouleau (4') sont fixés et tournant sur une première plaque de support (21) sur un axe perpendiculaire à ladite plaque (22) ;
• un engrenage passif (5) muni d'un rouleau coaxial (5'), ledit engrenage passif étant fixé via son axe de rotation sur un récepteur ou seconde plaque de support mise en forme (22) et pivotant par rapport à la première plaque de support au moyen d'un ergot de rotation (12),
• un système (8) pour régler le récepteur (22) par une vis à genouillère (23) et un boulon (24) avec un ressort de réglage (25) au niveau d'une première extrémité, ledit système de réglage pivotant sur ledit récepteur tournant (22) sur un axe parallèle à l'ergot de rotation (12) du récepteur et avec une extrémité de fixation (28) à ladite première plaque de support (21) ;
dans lequel le système (8) pour régler le récepteur (22) permet par le serrage de ladite vis/boulon (23, 24) la mise en prise dudit engrenage passif (5) sur ledit engrenage moteur (4) et le serrage desdites poulies d'entraînement (4') (5') coaxiales auxdits engrenages (4) (5), sur ledit guide (30), de sorte que ledit dispositif d'actionnement (20) se déplace le long dudit guide.

2. Dispositif selon la revendication 1, dans lequel une paire de roues d'équilibrage (9', 9") est fixée sur ladite plaque de support (21) et tourne sur des axes perpendiculaires à ladite plaque (21), de sorte que, en fonctionnement, ladite plaque (21) repose sur ladite paire de roues d'équilibrage (9', 9") et le point de support desdites paires de roues est coplanaire avec le point de support dudit moteur d'entraînement de rouleau (4') sur ledit guide.

3. Dispositif selon les revendications 1 à 2, dans lequel entre ledit moteur (1) et ledit engrenage moteur (4) est prévu un engrenage de réduction (3), de préférence de type orthogonal.

4. Dispositif selon les revendications 1 à 3, dans lequel le mécanisme de transfert (2) du mouvement rotatif provenant du moteur à destination des rouleaux (4, 5) est un arbre de rotation souple.

5. Dispositif selon les revendications 1 à 4, dans lequel les rouleaux mobiles (4', 5') ont un siège (26) pour loger lesdits guides (30) et le récepteur (22) est en forme de U.

6. Système de couvercle (100) pour une benne de camion comprenant des guides (30) fixés de façon rigide aux parois latérales (120) de ladite benne de camion respectivement agencés un de chaque côté le long des bords supérieurs desdites parois latérales (120) de ladite benne de camion, des contreventements (11a, 11b, ..., 11n) sur lesquels une bâche (15) est fixée et au moins une paire de dispositifs d'actionnement (20) selon l'une des revendications 1 à 5, un pour chaque côté, sur lequel est fixé au moins le premier contreventement (11a) positionné vers le hayon (46) de ladite benne (100), pour fermer et ouvrir ladite bâche (15), ladite paire de dispositifs d'actionnement se déplaçant, en fonctionnement, le long desdits guides (30), un moteur (1) monté sur ledit premier contreventement (11a), des arbres souples (2) pour transmettre simultanément le mouvement rotatif du moteur (1) à ladite paire de dispositifs d'actionnement (20) ; dans lequel lesdits dispositifs d'actionnement (20) se déplacent en fonctionnement simultanément le long dudit guide (30) déployant ou fermant ledit couvercle (100).

7. Système de couvercle selon la revendication 6, dans lequel une paire de contreventements (11a, 11a') est fixée de façon rigide à ladite plaque (21) desdits dispositifs d'actionnement (20).

8. Système de couvercle selon les revendications 6 à 7, dans lequel sont présentes plusieurs paires de dispositifs d'actionnement (20) fixées de façon rigide à plusieurs paires de contreventements (11n, 11n') équipés chacun d'un moteur.

9. Système de couvercle selon les revendications 6 à 8, dans lequel lesdits guides (30) situés sur lesdites parois latérales (120) de ladite benne de camion continuent en correspondance de ces dernières, mais séparés de celles-ci, en comprenant en outre des guides (30') placés sur le côté de la partie fixe (42) de la benne de camion, de sorte que lorsque la benne est complètement découverte, les dispositifs d'actionnement (20) sont situés sur le guide fixé (30') avec la partie fixe (42) et les parois latérales (120) de la benne de camion peuvent être ouvertes pour le déchargement du matériau par le côté.
